# EUROPEAN PATENT APPLICATION

(11) **EP 2 071 503 A1**
(43) Date of publication of application: **17.06.2009**
(21) Application number: 08305923.8
(22) Date of filing: 11.12.2008
(51) Int. Cl.: G06Q 30/00

(54) **Immersion into a virtual environment through a solicitation**

(30) Priority: 14.12.2007 US 956355
(71) Applicant: FRANCE TELECOM, 75015 Paris (FR)
(72) Inventor: Cahuzac, Maud, San Francisco, CA 94103 (US); Narayanan, Rajesh, San Jose, CA 95129 (US)

(57) **Abstract**

Advertising content is provided to a user together with other content the user is consuming. The advertising content may be in a form of a solicitation to interact with a virtual environment. In a case wherein the user selects to interact with the virtual environment, an avatar is determined for interaction with the virtual environment. In accordance with an embodiment, at least a portion of the avatar rendering characteristics is determined without user intervention. After the avatar is determined, the virtual environment is rendered together with the determined avatar.

## Description

### FIELD OF THE PRESENT SYSTEM:

The present system relates to a method, user interface (UI) and apparatus for providing immersion into a virtual environment.

### BACKGROUND OF THE PRESENT SYSTEM:

Numerous electronic media are vying for attention from today's consumers. Traditional forms of advertising such as print and typical audio/visual broadcast (e.g., television) are diminishing in importance since consumption of publications are in sharp decline and user's are likely to consume at least a portion of the audio-visual broadcast content using systems of time-shifting wherein live broadcasts are recorded and viewed at a later time. The user's that do consume the recorded content are increasingly fast-forwarding past the broadcast advertising content.

Further, new forms of content are being provided, such as content available to the user over a connection to the Internet. The content available over the Internet may also be selectively viewed by the user and as such does not provide an ideal location for positioning of advertising content. While advertising content often accompanies other content provided through the Internet, the Advertising content is traditionally provided by a positioning of advertising content on a same viewed page as other content that may be of interest to the user. Other means such as pop-up advertising content and overlay advertising may be provided but has somewhat a similar success level at engaging the user to first view the advertising content, and perhaps to later become engaged by the content. Current advertising content often provides an indication of a product or service, in a form for example, as a Hypertext Markup Language (HTML) content portion which includes Internet links to further information, such as in a form of a link to an advertiser website. The number of times that advertising content is provided to users is measured as impressions. Through further user interaction, often purchasing transactions may be executed by the user or additionally information in a form of further websites, web-pages, portions thereof, etc., may be provided to a user.

Nonetheless, a percentage of user's that engages the advertising content is relatively small even with the aid of preferential treatment provided to some advertising content through the use of paid placements of advertising content on known web-based information search engines. In more recent developments, Internet based audio-visual content is provided by numerous sources and in some cases, this content may not be consumed without at least some rendering of advertising content. While users may be "forced" to allow rendering of advertising content prior to or following content that the user desires to consume, this does not necessarily lead to the user becoming engaged by the content.

The number of users choosing to interact with advertising content is a measurable commodity and is utilized to gage and charge for the placement of advertising content provided through use of the Internet. Significant revenue is generated over Internet ad placement and is measured in terms of eyeballs or Cost per Thousand Impressions (Cost Per Mille or CPMs). CPM constitutes a well known concept in the advertisement industry. Nonetheless, there are still issues raised over what actual value may be placed on eyeballs. Those of ordinary skill in the art recognize the limitations of utilizing eyeballs as a measure of how engaged a user is by advertising since although it does measure how often users may be provided given advertising content termed impressions, it is not a measure of the effect on the users being provided the advertising content. Further systems measure click-through rate by users which is a measure of how often advertising links provided in advertising content are followed by the user. The click-through rate is determined by dividing the number of users who clicked on the advertising content by the number of times the advertising content was delivered to users.

A banner ad is another system utilized for providing advertising content. The banner ad is a system wherein advertising content is also overlaid or placed along other content. Wikipedia, The Free Encyclopedia in an article on click-through rate (see, Wikipedia, Click-through rate, available via the Internet at en.wikipedia.org/wiki/Click-through_rate, article rendered as of Dec. 2, 2007, 19:21 GMT) stipulates that banner ad click-through rates have fallen over time from a time when first introduced, often measuring significantly less than 1 percent. While it may be true that by selecting an appropriate advertising site with high affinity between the content available through the site and the advertising content (e.g. a movie magazine for movie advertising content), a given banner ad may achieve a substantially higher click-through rate then when the affinity between the content and the ad content does not exist, the number of users clicking through is still not as high as desired. Personalized ads, unusual formats, and more obtrusive advertising content may also result in higher click-through rates than standard banner ads, yet advertisers still would like higher percentages of interaction by the users.

In other systems, advertising content may be provided as a flash-based game, although typically these games again merely end up in redirecting the user to an advertiser's web site.

Virtual environments provide a compelling environment for a rich and complex presentation of advertising content, however, to experience virtual environments, users typically need to invest a lot of time in creating an avatar to represent the user's "presence" within these virtual environments. Moreover, if users are willing to log into various virtual environments presented by advertisers, the user typically has to create a different avatar for each virtual environment visited.

As a consequence of this up-front time commitment for creating an avatar, most users don't experience virtual worlds because the user does not want to go through this long and uneasy process of creating an avatar account and profile. Further, not only does the avatar creation take a lot of time and effort, there is little provided from outside the virtual environment that makes the user want to interact virtually with a Brand, or attract the user to engage with the Brand' s product virtually. To appreciate virtually interacting with a Brand, in prior systems the user needs to make the investment in time and effort to create an avatar to enable interaction from within the virtual world.

While advertising Brands would like to utilize a virtual presence to promote its products, the user's up-front time commitment affects the Brands abilities to engage new users in the virtual environments. Most Brands have invested a lot of money to have a presence on virtual worlds, only to see a lack of user's presence in interacting with the virtual worlds. Further, existing users may go away due to the bad quality of the virtual environment experience yet Brands are hesitant to invest further moneys into the virtual environment that to date, brings in comparatively little "eyeballs" or traffic.

It is an object of the present system to overcome disadvantages and/or make improvements in the prior art.

### SUMMARY OF THE PRESENT SYSTEM:

The present system includes a system, method, user interface and device for providing immersion into virtual environment advertising content that may be provided as an advertising content overlay or as advertising content provided alongside other content. In one embodiment, the advertising content operates as a solicitation to enter a virtual environment, such as provided by an advertiser. For example, a banner ad may be provided as the solicitation to enter the virtual environment.

In accordance with an embodiment, advertising content may be provided to a user together with other content the user is consuming. The advertising content may be in a form of a solicitation to interact with a virtual environment. In a case wherein the user selects to interact with the virtual environment, a temporary avatar is determined for interaction with the virtual environment. In accordance with an embodiment, at least a portion of avatar rendering characteristics is determined without user intervention. After the avatar is determined, the virtual environment is rendered together with the determined avatar.

In one embodiment, the advertising content may be provided as a banner ad that is rendered on a rendering device at a same time as the other content. The advertising content may include a depiction of the virtual environment. The depiction of the virtual environment may be a dynamic depiction. In an embodiment wherein the depiction is dynamic, the dynamic depiction may be one or more of a historical depiction, a current depiction and an advertiser conceptual rendering. In an alternate embodiment, the depiction of the virtual environment may be a static depiction.

The determined avatar may be a default avatar based on the solicitation. Determining the avatar may include determining at least a portion of the avatar characteristics based on a profile associated with the user. In another embodiment, the avatar may be based on a default profile. Further, the avatar may be based on or modified by at least one of a user profile, an advertiser profile and a profile associated with the virtual environment. In an embodiment wherein the avatar is modified, the default avatar may be based on a user profile including user characteristics such as physical attributes of the user. In an embodiment wherein the default avatar is modified based on an advertiser profile, the advertiser profile may include advertiser-associated content items.

The present system may maintain a count of user provided solicitations including an indication as to whether the solicited users selected to interact with the virtual environment and a measure of lengths of time of the selected interaction. Further, the present system may maintain a count of user interactions including a nature of the interaction (e.g., selecting a virtual object for viewing may be counted separate from selecting a virtual object to be carried around with the avatar within the virtual environment). Different costs may be accessed by the provider of the solicitation to the host or "owner" of the virtual environment for each of the above interactions and others that may be envisioned.

### BRIEF DESCRIPTION OF THE DRAWINGS:

The invention is explained in further detail, and by way of example, with reference to the accompanying drawings wherein:
FIG. 1 shows a system in accordance with an embodiment of the present system;
FIG. 2 shows a process flow diagram in accordance with an embodiment of the present system; and
FIG. 3 shows a portion of a system (e.g., client, server, proxy, etc.) in accordance with an embodiment of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, etc. However, it will be apparent to those of ordinary skill in the art that other embodiments that depart from these details would still be understood to be within the scope of the appended claims. Moreover, for the purpose of clarity, detailed descriptions of well known devices, circuits, techniques and methods are omitted so as not to obscure the description of the present system. It should be expressly understood that the drawings are included for illustrative purposes and do not represent the scope of the present system.

For purposes of simplifying a description of the present system, the term rendering and formatives thereof as utilized herein refer to providing content, such as content related to a virtual environment including a presence of an avatar depicted within and interacting with the virtual environment, such that it may be perceived by at least one user sense (e.g., sense of sight and/or a sense of hearing). For example, a rendered virtual world may include audio content, visual content, and/or textual content, etc., that is perceivable by the user, for example via a user rendering device accessing a server that is hosting the virtual environment. The term "operatively coupled" and formatives thereof as utilized herein refer to a connection between devices or portions thereof that enables operation in accordance with the present system. For example, an operative coupling may include one or more of a wired connection and/or a wireless connection between two or more devices that enables a one and/or two-way communication path between the devices or portions thereof.

The system and method described herein address problems in prior art systems. In accordance with an embodiment of the present system, a system, method, user interface and device may provide a user with an ability to interact with a Brand and advertising content in a Virtual Environment. In one embodiment, the interaction is facilitated through advertising content provided to the user as a solicitation that may be provided to the user similar as other advertising solicitations however, unlike other solicitations that may include merely links to other static pages of advertising content, in accordance with the present system, the user is provided a solicitation to enter a virtual environment.

In accordance with an embodiment of the present system, the solicitation may operate to provide a user adequate credentials to enter the virtual environment without a need for the user to have an account within the virtual environment where the immersion takes place. In accordance with a further embodiment, the solicitation may provide, in effect, a default and/or user profile-based avatar for users to automatically and easily immerse themselves in a virtual world. Hence, in accordance with this embodiment of the present system, the user does not need to have an account or prior avatar associated with the virtual environment in order to experience the virtual environment and its objects including objects associated with an advertiser's Brand.

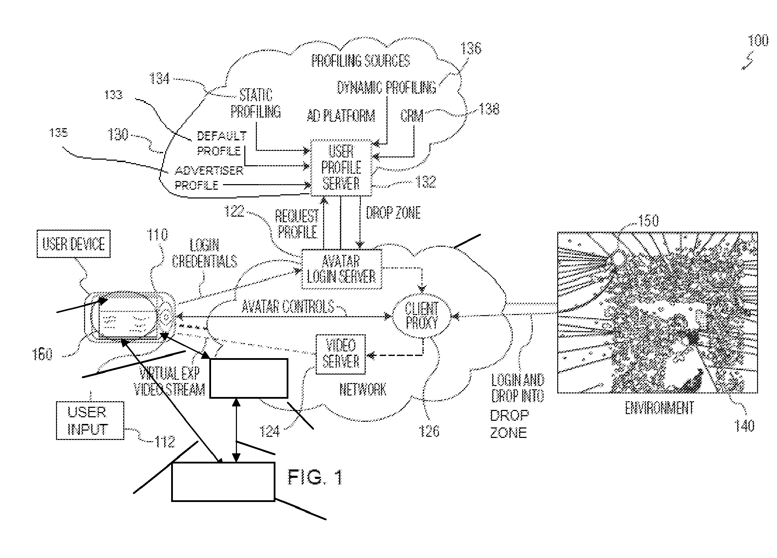

FIG. 1 shows a system 100, one or more portions of which may be utilized for operation in accordance with the present system. The system 100 may include a user device 110 that interacts with content provided over an operable coupling 185, illustratively shown as an Internet connection, which is operatively coupled to the user device 110. In accordance with this embodiment of the present system, the Internet connection 185 operably couples the user device 110 to a source of content 180, illustratively shown as a web-site server, which provides content 160 (e.g.. Internet content) to the user device 110. In this way, the user device 110 may be operable for so-called "browsing" of the Internet content 160.

In other embodiments, the content 160 may be provided over other operable connections, such as through a device that interacts with broadcast content, such as a set-top box and audio/visual rendering device, such as a television. In a set-top box embodiment, the set-top box is a device that enables the television to become a user interface to the Internet and also enables a television set to receive and decode content, such as audio content, visual content, audio/visual content, textual content, etc., that may be broadcast or otherwise delivered through the operable coupling 185 (e.g., wired and/or wireless cable transmission, DSL transmissions, etc.). Other sources of content that may operate in accordance with the present system would readily occur to a person of ordinary skill in the art and are intended encompassed by the present system. Accordingly, while an Internet connection 185 and web-site server 180 are illustratively discussed herein to simplify the discussion, the other systems should be understood to be included in the discussions that are contained herein.

The present system further shows an operable coupling 195 between the user device 110 and an advertising content server 190 for purposes of providing advertising content 170 to the user device 110. As may be appreciated, in other embodiments, the operable coupling between the advertising content and the user device need not be separate from the operable coupling between the content server 180 and the user device 110. In one embodiment in accordance with the present system, an operable coupling 197 may exist between the advertising content server 190 and the content server 180 for providing the advertising content 170. In yet another embodiment, the content server 180 may operate to provide the content 160 and the advertising content 170.

In accordance with the present system, the advertising content 170 is not merely static solicitations or links to an advertiser's web-site. The present advertising content 170 in one embodiment, is a solicitation to enter an advertiser sponsored virtual environment 150. The advertiser sponsored virtual environment 150 may represent a portion of a virtual environment 140 or may represent the entire virtual environment.

To facilitate immersion of the user with the advertiser sponsored virtual environment 150, the advertising content 170 may include a default avatar configuration and login credentials to enable the user to interact with the advertiser sponsored virtual environment 150 without a need to put the user through an avatar creation process or lengthy login process. In another embodiment or as desired by the user, an avatar creation process and/or login process may be utilized. However, it is believed that an avatar creation process that is involved will greatly reduce the number of user's that decide to enter the advertiser sponsored virtual environment 150. Clearly, the advertising content 170 may merely provide a link to a default avatar and login credentials thereby, reducing bandwidth requirements for merely providing the advertising content 170 to the user device 110.

To facilitate interaction with the advertiser sponsored virtual environment 150, the user device 110 may interact with the advertiser sponsored virtual environment 150 via a network 120. An avatar login server 122 is shown operatively coupled to the user device 110 and a client proxy 126 that provides the user device 110 access to the virtual environment 140 including the advertiser sponsored virtual environment 150 portion of the virtual environment 140. The network 120 also includes a video server 124, which may host the virtual environment. The video server 124 may be operatively coupled to the client proxy 126 and the user device 110. As may be readily appreciated, the video server 124 may include one or more storage devices and processing units for providing the virtual environment 140 and the default avatar to the user device 110.

In accordance with an embodiment of the present system, a default avatar may be selected from an avatar database, such as stored in the avatar login server 122 and/or may be created/modified for the duration of immersion into the virtual environment 140 and/or the advertiser sponsored virtual environment 150. Moreover, a selection and/or creation/modification of the default avatar may be based on user profile information, such as opt-in information that the user is willing to share with a network operator, such that basic information (age, gender, physical characteristics, etc.) or preferences are utilized for selection of the default avatar and/or creation/modification of a user specific avatar.

To facilitate user creation/modification of a default avatar or user specific avatar, the system 100 may further include one or more profiling sources 130 that interact with the network 120 for purposes of providing user profile elements to the avatar login server 122 for avatar creation/modification. The profiling sources 130 may store profile elements of the user device 110 unique to a given user device 110 and/or unique to the given user (e.g., user identification information) to aid in current and subsequent accessing of the virtual environment by a selected/created/modified avatar. As may be readily appreciated, elements unique to the user device 110 and the given user may also be stored directly on the user device 110 in accordance with the present system and/or may be stored within the network 120, such as on a server accessible through the network 120. In one embodiment, elements unique to the user device 110 and the given user may be stored directly (e.g., solely) on the user device 110 to address privacy concerns of the user.

In one embodiment of the present system, the profiling sources 130 may includes a user profiling server 132 that may include user/user device profiling sources such as static profiling 134, dynamic profiling 136, customer relationship management (CRM) software 138, etc. For example, the profiling sources 130, as may be readily appreciated by a person of ordinary skill in the art, may include implicit profiling, explicit profiling, and/or combinations thereof to provide a user profile for the given user of the user device 110. The profile may also include user identifying information to associate the profile with the given user when the user selects to enter the advertiser sponsored virtual environment 150 through use of the present virtual environment solicitation 170.

While the present system may provide for a default avatar (e.g., an avatar having no intended relationship to any characteristics or preferences of the user) for interaction with the virtual environment 140 generally or the advertiser sponsored virtual environment 150, it is believed that an avatar that reflects characteristics or preferences that are familiar and/or desirable to the user will more likely result in the user becoming more fully immersed in the virtual environment. Wherein characteristics of the user are utilized for avatar selection/creation/modification, the avatar's interaction within the virtual environment may provide an increased perception of reality from the view point of the user and thereby lead to further user participation with this or other virtual environments.

In addition, other profiling elements related to avatar creation or unrelated may also be incorporated into avatar creation. For example, a profile 135 provided by an advertiser may also be incorporated into avatar selection/creation/modification. In this way, an avatar entering the advertiser sponsored virtual environment 150 may also be selected/created/modified to exhibit characteristics of the advertiser supplied profile 135, such as exhibiting cloths, products, logos and/or other characteristics of the advertiser as provided in the advertiser profile 135. For example, an avatar being created based on a user profile and/or a default profile 133, may be modified in accordance with the advertiser supplied profile 135, such as "a typical BMW purchaser" as determined by advertiser supplied profile elements.

To simplify the discussion herein, a default avatar will be discussed in operation with the present system, although this discussion should be understood to include embodiments wherein the avatar is created, selected and/or modified by the user.

In one embodiment in accordance with the present system, the virtual environment solicitation 170 may simply provide the credentials (e.g., default avatar, login credentials, links thereto, links to the virtual environment, etc.) for the user to access the virtual environment. For example, for a virtual environment solicitation 170 to the advertiser sponsored virtual environment 150 in a virtual environment, such as Second Life^{™}, the virtual environment solicitation 170 may include a link to the advertiser sponsored virtual environment 150 through use of a so-called SLurl.

In another embodiment in accordance with the present system, the virtual environment solicitation 170 may provide an actual rendering of the advertiser sponsored virtual environment 150. In this way, a user may be provided with an indication as to how the advertiser sponsored virtual environment 150 appears even before user selection to interact with the advertiser sponsored virtual environment 150. The rendering may be simply a static rendering from the advertiser sponsored virtual environment 150 or may be a current/past dynamic rendering of the advertiser sponsored virtual environment 150 including interactions that are and/or have occurred within the advertiser sponsored virtual environment 150. Naturally the rendering of the virtual environment solicitation 170 may simply be a depiction of what the advertiser sponsored virtual environment 150 could look like, like an advertiser created rendering of the advertiser sponsored virtual environment 150 (e.g., a movie trailer and link, yet intended to depict the advertiser sponsored virtual environment 150).

It should be noted that while the video server 124, user profile server 132, web-site server 180 and advertising server 190 are shown as separate portions of the system 100, this is intended to only reflect separate functions to facilitate the discussion. In some embodiments, all or some portion thereof the servers may be incorporated into one or more actual physical devices.

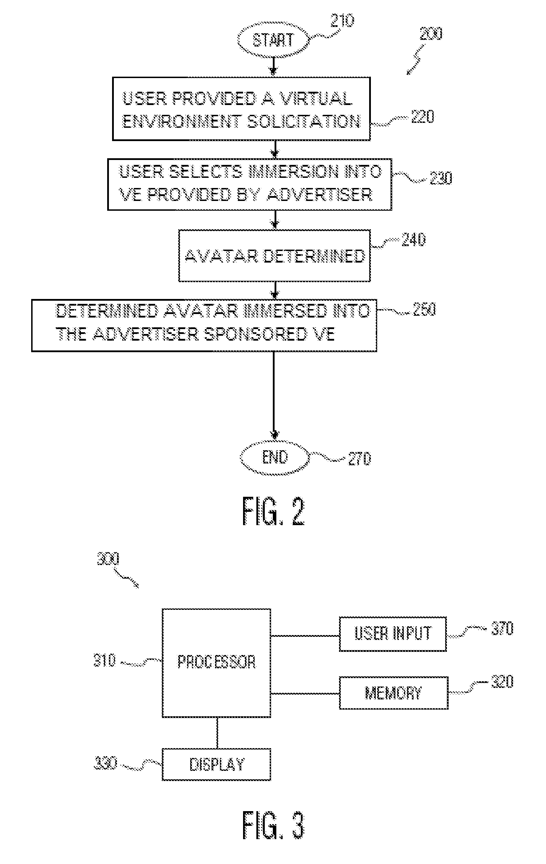

FIG. 2 shows a flow diagram 200 including details of an advertiser solicitation and immersion of a user in an advertiser provided virtual environment or portion thereof in accordance with an embodiment of the present system. The process begins during act 210 wherein a user activates a user device to consume content. Any number of user devices may be suitably employed in accordance with the present system, such as handheld devices, gaming stations, video players, personal digital assistants (PDAs), set top boxes (STB), televisions, cellular phones, personal computers, etc. The user device may also include a browser based client, like a Java-Applet and/or Flash based program. As may be readily appreciated, in accordance with this embodiment, any device that can support a rendering of content (audio and/or video) transferred from a second party source may be employed as the user device. For example, in one embodiment the second party source need only be a storage and rendering device adapted to store and render content, and adapted to support the processing acts as described further herein.

During act 220, a user consuming content is provided a virtual environment solicitation together with the content the user is consuming. The virtual environment solicitation 170 acts as a solicitation for the user to interact with a virtual environment sponsored by the advertiser. As stated above, the virtual environment solicitation may already provide user immersion into the advertiser sponsored virtual environment in that the virtual environment solicitation may provide images (static or dynamic) that depict the virtual environment.

In another embodiment, the virtual environment solicitation acts as a login request to a virtual environment. The login request may include creation/selection/modification of an avatar and/or application of a default avatar. As is readily appreciated, the system may operate similarly regardless of whether a default avatar is utilized and/or a user associated (based on the user profile) avatar is created or modified.

During act 230, the user selects immersion into the virtual environment provided by the advertiser. The user device may provide user identifying information as may be readily appreciated so that the device, user and/or user characteristics may be identified. The user device may also provide information identifying the advertiser sponsored virtual environment based on the solicitation. In accordance with the present system, regardless of how an avatar is selected/created/modified, an avatar is determined during act 240. In a case wherein a user profile is utilized during the avatar determination, the term "user profile" as utilized herein, should be understood to include one or more of elements that are related to a given user such as may be stored in a user profile including elements related to a default and/or advertiser profile. Such elements may include the given users physical attributes, usage characteristics, such as time spent interacting with the user device and other usage characteristics, such as an identification of content (e.g., actual identification, such as program/content names, attributes, genre, etc.) that the user interacts with, rendering habits (e.g., time, place, etc.), purchasing history/habits (e.g., identification of purchased products and purchase locations, such as network locations (URLs), and/or physical locations) as well as any other elements that are associated with the given user that may be utilized to determine avatar characteristics.

In any event and regardless of how an avatar is determined during act 240, the determined avatar is immersed into the advertiser sponsored virtual environment during act 250. In an embodiment wherein the solicitation is provided as a dynamic rendering of the advertiser sponsored virtual environment, such as by a banner add provided to the user, the immersion of the determined avatar into the advertiser sponsored virtual environment may occur as an animated event. For example, the determined avatar may be visually transported into the advertiser sponsored virtual environment, such as being visually reduced in size till the determined avatar is a suitable size for interaction with the advertiser sponsored virtual environment. Other means of depicting the beginning of the immersion of the determined avatar would occur to a person of ordinary skill in the art and are intended a part of the claims as presented unless stated otherwise. In an embodiment, a capability to be transported into an advertiser's virtual environment may occur while a video commercial is provided on the user device. An activation of a user input (e.g., a key on a cell phone, a button on a TV/STB remote control, etc.) may operate to select interaction with the virtual environment resulting in the video commercial being rendered while an avatar is determined for the user. The rendering of the virtual immersion experience including initiation of the rendering may depend on the user device used for the interaction. A user device with more capabilities for rendering and/or processing may be provided a more detailed rendering of the virtual world. Further, additional interactions with the virtual world may be enabled based on capabilities (e.g., computing power, display capabilities, user input device type, etc.) of the user device.

In any event, thereafter, the user's avatar may be free to wander the virtual environment including interaction with virtual objects if desired and the process ends during act 270, when the user decides to end the immersion.

In accordance with the present system, by determining the avatar description based on the user profile (with or without further user interaction), the initial barrier to the user interacting with a virtual environment is significantly decreased. Thereby, an advertiser may be assured of receiving addition eyeballs that may otherwise not have been inclined to attempt to surmount the initial avatar creation obstacle.

In accordance with the present system, even casual interactions with the virtual environment may be encouraged since the initial setup required to be supervised by the user is greatly diminished or removed completely (e.g., automatic selection/creation/modification such as a default avatar). In accordance with the present system, the virtual environment solicitation may operate to transport a user-associated avatar to the virtual environment. In this way, the virtual environment solicitation may operate to simplify a user gaining knowledge of an advertiser and/or given products, trademarks, etc. through encouraged participation by the user in the advertiser sponsored virtual environment. Engagement of the user into the advertiser sponsored virtual environment may be encouraged by incorporation of the user profile into the determination of the avatar.

In accordance with the present system, virtual environments may represent a favorable brand-immersion platform and thereby favorably compare to more standard types of advertiser sponsored solicitations regardless of the user device utilized to interact with the content and thereby, the virtual environment. In accordance with the present system, rates for impressions and/or CPMs of the advertiser sponsored virtual environment may be charged as a percentage, with a multiple higher than 1, of the CPM for more typical advertising sponsored content whether it be pop-up based, banner based, or provided as other overlaid and/or integrated advertising content. For example, the cost for providing a banner-like virtual environment solicitation may be charged at a rate of 1.5 times the CPM for a similarly provided (e.g., banner based) typical advertisement content item. Of course other multiples as reasonably dictated by success levels in soliciting interaction may readily be determined. In accordance with an embodiment of the present system, the present system may maintain a count of user interactions including a nature of the interaction (e.g., selecting a virtual obj ect for viewing may be counted separate from selecting a virtual object to be carried around with the avatar within the virtual environment). Revenues for a provider of the solicitation may also be a based on the time spent by the avatar in the virtual environment, the actions taken by the avatar (e.g., looking at virtual products, talking to a representative, such a virtual representative provided by an advertiser's avatar, asking other avatars for feedback on a particular product, etc.) and even whether or not a purchase results. Different costs may be accessed by the provider of the solicitation to the host or "owner" of the virtual environment for each of the above interactions and others that may be envisioned.

In accordance with an embodiment, one or more of the servers may maintain a count of solicitations provided including a count of solicitations that are interacted with by the user, time spent in interaction, number of additional actions taken in the immersion etc. all of which may be utilized to determine a billing rate for the solicitation in general (e.g., 1.5 times the billing rate of other contracted typical solicitations), and the billing rate for each additional act that the consumer takes in interacting with the solicitation, for example including time the user spends interacting with the immersion.

FIG. 3 shows a portion of a system 300 (e.g., client, server, proxy, etc.) in accordance with an embodiment of the present system. For example, a portion of the present system may include a processor 310 operationally coupled to a memory 320, a display 330 and a user input device 370, such as a user input 112 of the user device 110 depicted in FIG. 1. The memory 320 may be any type of device for storing application data as well as other data related to the described operation. The application data and other data are received by the processor 310 for configuring the processor 310 to perform operation acts in accordance with the present system. The operation acts may include rendering of the virtual environment solicitation typically together with other rendered content, avatar determination and controlling the display 330 to display content such as the virtual environment and related operation paradigms (e.g., user interface). The user input 370 may include a keyboard, mouse, trackball or other device, including touch sensitive displays, which may be stand alone or be a part of a system, such as part of a personal computer, personal digital assistant, mobile phone, set top box, television or other device for communicating with the processor 310 via any operable link. The user input device 370 may be operable for interacting with the processor 310 including enabling interaction within the virtual environment, selecting elements of the user profile to apply to avatar selection/creation/modification and/or other elements of the present system. Clearly the processor 310, the memory 320, display 330 and/or user input device 370 may all or partly be a portion of a computer system or other device such as a client and/or server as described herein.

The methods of the present system are particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 320 or other memory coupled to the processor 310.

The memory 320 configures the processor 310 to implement the methods, operational acts, and functions disclosed herein. The memories may be distributed, for example between the clients and/or servers, or local, and the processor 310, where additional processors may be provided, may also be distributed or may be singular. The memories may be implemented as electrical, magnetic or optical memory, or any combination of these or other types of storage devices. Moreover, the term "memory" should be construed broadly enough to encompass any information able to be read from or written to an address in an addressable space accessible by the processor 310. With this definition, information accessible through a network is still within the memory, for instance, because the processor 310 may retrieve the information from the network for operation in accordance with the present system.

The processor 310 is operable for providing control signals and/or performing operations in response to input signals from the user input device 370 as well as in response to other devices of a network and executing instructions stored in the memory 320. The processor 310 may be an application-specific or general-use integrated circuit(s). Further, the processor 310 may be a dedicated processor for performing in accordance with the present system or may be a general-purpose processor wherein only one of many functions operates for performing in accordance with the present system. The processor 310 may operate utilizing a program portion, multiple program segments, or may be a hardware device utilizing a dedicated or multi-purpose integrated circuit.

Further variations of the present system would readily occur to a person of ordinary skill in the art and are encompassed by the following claims. Through operation of the present system, a virtual environment solicitation is provided to a user to enable simple immersion into a virtual environment and its objects.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended spirit and scope of the present system as set forth in the claims that follow. In addition, the section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method of immersing a user into a virtual environment (140), the method comprising acts of:
providing advertising content to a user (110) together with other content the user is consuming, wherein the advertising content is in a form of a solicitation to interact with a virtual environment;
selecting interaction with the virtual environment;
determining an avatar with avatar rendering characteristics for interaction with the virtual environment, wherein at least a portion of the avatar rendering characteristics are determined without user intervention; and
rendering the virtual environment and the determined avatar.

2. The method of Claim 1, wherein the advertising content is provided as a banner ad that is rendered on a rendering device (110) at a same time as the other content.

3. The method of Claim 1, wherein the advertising content includes a depiction of the virtual environment.

4. The method of Claim 3, wherein the depiction of the virtual environment is a dynamic depiction.

5. The method of Claim 3, wherein the depiction of the virtual environment is a static depiction.

6. The method of Claim 1, wherein the act of determining an avatar comprises an act of determining a default avatar based on the solicitation.

7. The method of Claim 1, wherein the act of determining an avatar with avatar rendering characteristics comprises an act of determining at least a portion of the avatar rendering characteristics based on a profile associated with the user.

8. The method of Claim 1, wherein the act of determining avatar comprises acts of:
determining avatar rendering characteristics based on a default profile; and
modifying the determined avatar rendering characteristics based on at least one of a user profile, an advertiser profile and a profile associated with the virtual environment.

9. An application embodied on a computer readable medium arranged to solicit immersion of a user into a virtual environment (140), the application comprising:
a portion configured to provide advertising content to a user (110) together with other content the user is consuming, wherein the advertising content is in a form of a solicitation to interact with a virtual environment;
a portion configured to receive a user selection to interact with the virtual environment;
a portion configured to determine an avatar with avatar rendering characteristics for interaction with the virtual environment, wherein at least a portion of the avatar rendering characteristics are determined without user intervention; and
a portion configured to render the virtual environment and the determined avatar.

10. The application of claim 9, wherein the advertising content is provided as a banner ad that is rendered on a rendering device (110) at a same time as the other content.

11. The application of claim 10, wherein the advertising content includes a depiction of the virtual environment.

12. The application of Claim 11, wherein the portion configured to render the virtual environment and the determined avatar is configured to dynamically render the virtual environment and the determined avatar.

13. The application of Claim 11, wherein the depiction of the virtual environment is a static depiction.

14. The application of Claim 9, wherein the portion configured to determine the avatar comprises:
a portion configured to determine the avatar rendering characteristics based on a default profile; and
a portion configured to modify the determined avatar rendering characteristics based on at least one of a user profile, an advertiser profile and a profile associated with the virtual environment.
